(19) Europäisches Patentamt
European Patent Office
Office européen des brevets

(11) **EP 4 501 616 A1**

(12) **EUROPEAN PATENT APPLICATION**
published in accordance with Art. 153(4) EPC

(43) Date of publication:
**05.02.2025 Bulletin 2025/06**

(21) Application number: 23781428.0

(22) Date of filing: **31.03.2023**

(51) International Patent Classification (IPC):
*B32B 5/26* (2006.01)      *B32B 27/12* (2006.01)
*B32B 27/30* (2006.01)      *B32B 23/10* (2006.01)
*B32B 9/02* (2006.01)

(52) Cooperative Patent Classification (CPC):
**B32B 5/26; B32B 9/02; B32B 23/10; B32B 27/12; B32B 27/30**

(86) International application number:
**PCT/KR2023/004345**

(87) International publication number:
**WO 2023/191578 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022   KR 20220040199**

(71) Applicant: **CJ CheilJedang Corporation**
**Seoul 04560 (KR)**

(72) Inventors:
• **HONG, Seok Jun**
  **Seoul 04560 (KR)**
• **PARK, Yukhen**
  **Seoul 04560 (KR)**
• **CHO, Kyoung Sik**
  **Seoul 04560 (KR)**
• **KIM, Grace**
  **Seoul 04560 (KR)**

(74) Representative: **Dehns**
**10 Old Bailey**
**London EC4M 7NG (GB)**

(54) **ECO-FRIENDLY PACKAGING MATERIAL AND MANUFACTURING METHOD THEREFOR**

(57)    The present invention relates to an eco-friendly packaging material and a manufacturing method therefor. Specifically, the packaging material according to an embodiment of the present invention includes a surface coating layer, a first fiber layer, a second fiber layer, and a sealing coating layer, and thus has high recyclability and decomposes well in the soil and ocean, and may have excellent oxygen and/or moisture barrier properties, printability, antifouling/water resistance properties, sealing properties, etc.

[Fig. 1]

EP 4 501 616 A1

## Description

### Technical Field

The present disclosure relates to an environmentally friendly packaging material that has a multi-layer structure and is excellent in printability, antifouling and water resistance properties, sealing properties, oxygen and/or moisture barrier properties, and the like, and is easily recyclable and biodegradable, and to a process for preparing the same.

### Background Art

Packaging materials commonly used for packing products such as food, pharmaceuticals, cosmetics, and industrial products are composed of a substrate layer for printing and surface protection, a barrier layer for blocking oxygen and moisture, and an inner layer for storing contents.

In this regard, conventionally, a polyethylene terephthalate (PET) film or a polypropylene (PP) film is adopted for the substrate layer, an aluminum foil or a nylon film is adopted for the barrier layer, and a low-density polyethylene (LDPE) film, a linear low-density polyethylene (LLDPE) film, or a cast polypropylene (CPP) film is adopted for the inner layer to prepare packaging materials.

However, it is difficult to recycle these packaging materials. Since they are composed of materials that hardly decompose, they have the problem of being difficult to completely decompose naturally when landfilled or taking hundreds of years to decompose depending on their types. In particular, they are hardly decomposed in soil or the ocean, causing serious problems with air pollution as well as marine pollution.

To solve the above problems, in recent years, environmentally friendly packaging materials have been developed in which biodegradable materials that are easily decomposed (e.g., polylactic acid (PLA)), instead of such materials as PET, nylon, and aluminum, which are not readily decomposed, are combined with highly recyclable paper.

However, since the above biodegradable materials have a low barrier to oxygen or moisture, packaging materials prepared using them have limitations in exhibiting the barrier properties required for packaging materials such as food, cosmetics, and pharmaceuticals. In addition, since packaging materials in which biodegradable materials and paper are combined have poor sealing properties, there is a disadvantage in that the layer made of biodegradable materials and the paper layer are delaminated during use or processing. In addition, there are difficulties in securing printability or antifouling and water resistance properties for designs.

Accordingly, there is a need to develop packaging materials with improved recyclability and enhanced performance while being decomposed well in the ocean and soil.

[Prior Art Document]

[Patent Document]

(Patent Document 1) Korean Laid-open Patent Publication No. 2012-0103158

### Disclosure of Invention

### Technical Problem

The present disclosure aims to provide a packaging material that has excellent recyclability, is well decomposed in soil and the ocean, and is excellent in barrier properties (gas barrier properties) to oxygen and/or moisture, printability, antifouling and water resistance properties, and sealing properties.

In addition, the present disclosure aims to provide a process for preparing a packaging material that can efficiently prepare the packaging material.

### Solution to Problem

According to one aspect of the present disclosure to solve the above problem, there is provided a multilayer packaging material that comprises a surface coating layer; a first fibrous layer; a second fibrous layer; and a sealing coating layer.

In an embodiment, the surface coating layer may comprise at least one selected from the group consisting of a water-based thermosetting acrylic resin, a water-based latex, a water-based modified latex, a water-based urethane resin, and a polyethylene emulsion.

In another embodiment, the first fibrous layer may comprise a primer layer formed on the surface, and the primer layer may comprise at least one selected from the group consisting of polyvinyl alcohol (PVOH) and modified starch.

In another embodiment, the second fibrous layer may have a density of 0.8 kg/m$^3$ or more.

In another embodiment, the second fibrous layer may comprise a portion of a component derived from the sealing coating layer.

In another embodiment, the sealing coating layer may comprise at least one selected from the group consisting of a water-based thermoplastic acrylic resin, polyhydroxyalkanoate (PHA), and a polyethylene emulsion.

In another embodiment, the multilayer packaging material may further comprise a barrier layer interposed between the first fibrous layer and the second fibrous layer.

In another embodiment, the barrier layer may comprise a biodegradable resin or a water-soluble resin.

In another embodiment, the barrier layer may comprise at least one selected from the group consisting of polyhydroxyalkanoate (PHA), polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), thermoplastic starch (TPS), cellulose-derived substances, whey protein, soy protein, and wheat protein.

Meanwhile, according to another aspect of the present disclosure, there is provided a multilayer packaging material that comprises a first fibrous layer and a second fibrous layer, wherein the Cobb sizing degree is 25 g/m$^2$·30 minutes or less.

In another embodiment, the multilayer packaging material may have an oxygen permeability of 100 cc/m$^2$·day or less and a moisture permeability of 100 g/m$^2$·day or less.

In another embodiment, the multilayer packaging material may have a sealing strength of 1 kgf/15 mm or more.

In another embodiment, the multilayer packaging material may have a surface energy of 38 dyne/cm or more.

Meanwhile, according to another aspect of the present disclosure, there is provided a process for preparing a multilayer packaging material that comprises coating a surface coating solution on one side of a first fibrous substrate to prepare a first fibrous film; coating a sealing coating solution on one side of a second fibrous substrate to prepare a second fibrous film; and laminating the first fibrous film and the second fibrous film such that the first fibrous substrate and the second fibrous substrate face each other.

In another embodiment, the process may further comprise interposing a barrier film between the first fibrous film and the second fibrous film and laminating them.

In another embodiment, the process may further comprise coating the other side of the first fibrous film or the other side of the second fibrous film with a barrier coating solution.

## Advantageous Effects of Invention

The packaging material according to the present disclosure has a specific multilayer structure in which two fibrous layers are provided in its inside, and a surface coating layer and a sealing coating layer are provided on the outside of the fibrous layers, respectively. Thus, it may be excellent in barrier properties to oxygen and/or moisture, printability, antifouling and water resistance properties, sealing properties, and the like.

In addition, in the packaging material according to the present disclosure, the surface coating layer and the sealing coating layer are composed of a water-based resin material, and the two fibrous layers are composed of a paper material. Thus, it may be highly recyclable and can be readily decomposed in soil and the ocean.

In addition, in the packaging material according to the present disclosure, a barrier layer composed of a biodegradable or water-soluble resin material is interposed between the two fibrous layers. Thus, it may have excellent barrier properties to oxygen and/or moisture, along with biodegradability.

In addition, the packaging material according to the present disclosure is prepared by using methods such as lamination, extrusion coating, and the like, which are used when plastic films are prepared. Thus, processability and productivity can be excellent.

Accordingly, the packaging material according to the present disclosure can be advantageously used for packaging various products such as food, pharmaceuticals, cosmetics, and industrial products.

## Brief Description of Drawing

Fig. 1 is a cross-sectional view showing a packaging material according to an embodiment of the present disclosure.
Fig. 2 is a cross-sectional view showing a packaging material according to another embodiment of the present disclosure.
Fig. 3 is a cross-sectional view showing a packaging material according to still another embodiment of the present disclosure.
Fig. 4 is a cross-sectional view showing a packaging material according to still another embodiment of the present disclosure.

**Best Mode for Carrying out the Invention**

Hereinafter, the present disclosure will be described with reference to embodiments. Here, the present disclosure is not limited to the disclosures given below, but it may be modified into various forms as long as the gist of the invention is not changed.

In the present specification, in the case where an element is mentioned to be formed, connected, or combined on or under another element, it means all of the cases where one element is directly, or indirectly through another element, formed, connected, or combined with another element. In addition, it should be understood that the criterion for the terms on and under of each component may vary depending on the direction in which the object is observed.

In the present specification, the term "comprising" is intended to specify a particular characteristic, region, step, process, element, and/or component. It does not exclude the presence or addition of any other characteristic, region, step, process, element and/or component, unless specifically stated to the contrary.

Throughout the present specification, the terms first, second, and the like are used to describe various components. But the components should not be limited by the terms. Specifically, the terms are used for the purpose of distinguishing one element from another.

All numbers and expressions related to the quantities of components, reaction conditions, and the like used herein are to be understood as being modified by the term "about" unless otherwise indicated.

The present disclosure relates to a packaging material having a specific multilayer structure (e.g., comprising two or more fibrous layers) and a process for preparing the packaging material by using methods such as lamination, extrusion coating, and the like, which will be described in detail as follows.

**Multilayer packaging material**

The packaging material according to the present disclosure comprises a surface coating layer, a first fibrous layer, a second fibrous layer, and a sealing coating layer. Specifically, the packaging material according to the present disclosure may be a laminated film in which a surface coating layer, a first fibrous layer, a second fibrous layer, and a sealing coating layer are laminated, or the laminated film that has been post-processed as necessary.

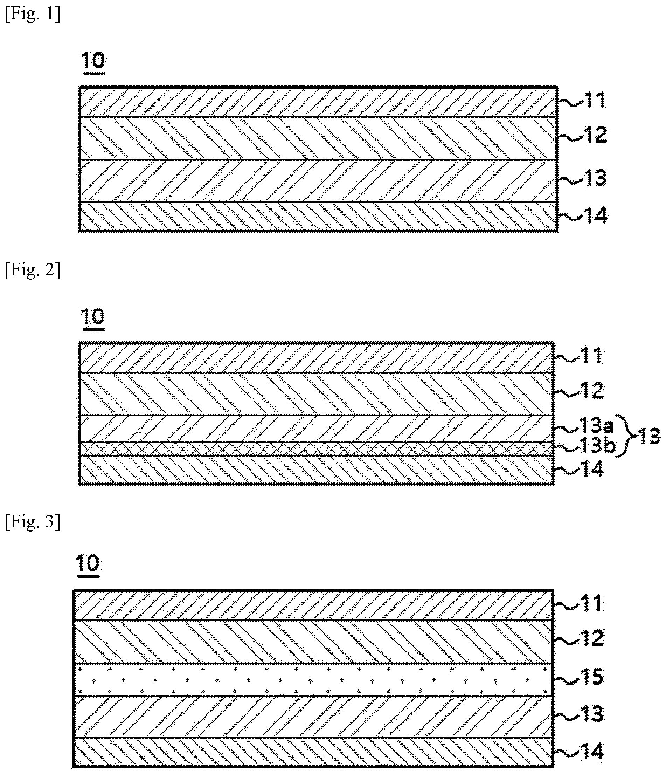

Hereinafter, each layer will be described in detail with reference to Figs. 1 to 4.

Surface coating layer

The packaging material (10) according to an embodiment of the present disclosure comprises a surface coating layer (11). The surface coating layer (11) functions to increase the printability (designability), water resistance (waterproofing), antifouling properties, and the like of the packaging material (10).

The surface coating layer (11) may comprise a material that can be formed into a film and has water-soluble properties while exhibiting water resistance required for the packaging material (10). Specifically, the surface coating layer (11) may comprise at least one selected from the group consisting of a water-based thermosetting acrylic resin, a water-based latex, a water-based modified latex, a water-based urethane resin, and a polyethylene emulsion. As the surface coating layer (11) comprises a material having water-soluble properties, the recyclability of the packaging material (10) can be enhanced. In addition, the surface coating layer (11) may further comprise additives such as mineral oil and wax to secure water resistance and antifouling properties.

The surface coating layer (11) may have a surface energy of 38 dyne/cm or more. Specifically, the surface coating layer (11) may have a surface energy of 38 to 55 dyne/cm, 40 to 55 dyne/cm, 42 to 55 dyne/cm, 44 to 55 dyne/cm, or 46 to 55 dyne/cm. As the surface energy of the surface coating layer (11) is within the above range, printing can be performed well on the surface coating layer (11), thereby enhancing the printability (designability) of the packaging material (10).

In addition, the surface coating layer (11) may have antifouling and water resistance properties to enhance the usability and processability of the packaging material (10). Specifically, the surface coating layer (11) may have a Cobb sizing degree of 30 $g/m^2 \cdot 30$ minutes or less. More specifically, the surface coating layer (11) may have a Cobb sizing degree of 1 to 30 $g/m^2 \cdot 30$ minutes, 1 to 25 $g/m^2 \cdot 30$ minutes, 1 to 20 $g/m^2 \cdot 30$ minutes, 1 to 14 $g/m^2 \cdot 30$ minutes, or 1 to 10 $g/m^2 \cdot 30$ minutes. As a result, the waterproofness of the packaging material (10) can be significantly enhanced.

The surface coating layer (11) may have a thickness of 3 to 30 $\mu$m, 3 to 20 $\mu$m, 3 to 15 $\mu$m, 3 to 10 $\mu$m, or 5 to 10 $\mu$m. As the thickness of the surface coating layer (11) is within the above range, the packaging material (10) is prevented from becoming thicker than necessary, thereby enhancing productivity, while securing water resistance, antifouling properties, and printability of the packaging material (10).

The surface coating layer (11) may be composed of a single layer or two or more layers (e.g., a laminated structure of a first surface coating layer and a second surface coating layer, or a laminated structure of a first surface coating layer, a second surface coating layer, and a third surface coating layer) to enhance water resistance or the like.

### First fibrous layer

The packaging material (10) according to an embodiment of the present disclosure comprises a first fibrous layer (12). A surface coating layer (11) may be formed on one side of the first fibrous layer (12). This first fibrous layer (12) functions to secure the external appearance of the packaging material (10) and secure the formation of a surface coating layer (11).

The first fibrous layer (12) may comprise paper made of mechanical pulp, semi-chemical pulp, or chemical pulp. The paper is not particularly limited and may be prepared or selected depending on the intended use. As the first fibrous layer (12) comprises paper made of the pulp, the packaging material (10) according to the present disclosure can be excellent in biodegradability and recyclability as compared with the conventional packaging materials in which a synthetic resin substrate such as polyethylene terephthalate (PET), polypropylene (PP), or the like is used.

Specifically, the first fibrous layer (12) may comprise paper with excellent water resistance (e.g., paper subjected to sizing treatment with alkyl ketene dimer (AKD) or aluminum-rosin). As the first fibrous layer (12) comprises paper with excellent water resistance, the surface coating solution for forming the surface coating layer (11) is prevented from migrating to the paper, whereby a surface coating layer (11) can be well formed.

Meanwhile, the first fibrous layer (12) may comprise a primer layer formed on its surface (one side, the other side, or both sides of the first fibrous layer (12)). As a primer layer is formed on the surface of the first fibrous layer (12), the barrier properties of the packaging material (10) to oxygen and/or moisture are increased, and the adhesive strength with the surface coating layer (11), a second fibrous layer (13), or a barrier layer (15) described below can be enhanced.

The primer layer may comprise a commonly known anchor coating agent. Specifically, the primer layer may comprise at least one selected from the group consisting of polyvinyl alcohol (PVOH) and modified starch.

### Second fibrous layer

The packaging material (10) according to an embodiment of the present disclosure comprises a second fibrous layer (13). A sealing coating layer (14) may be formed on one side of the second fibrous layer (13). This second fibrous layer (13) functions to increase the mechanical strength and smoothness of the packaging material (10) and secure a strong internal bond with the sealing coating layer (14).

The second fibrous layer (13) may comprise paper made of mechanical pulp, semi-chemical pulp, or chemical pulp. The paper may specifically be at least one selected from the group consisting of white paper (imitation vellum), off-white paper, colored paper, coarse paper, heavy paper, art paper, snow paper, snow white paper, single-sided art paper, royal art paper, leather paper, laid paper, Kraft paper, tracing paper, glassine paper, tant paper, fancy paper, white board paper, or photo paper. As the second fibrous layer (13) comprises the above paper, the packaging material (10) according to the present disclosure can be excellent in biodegradability and recyclability as compared with the conventional packaging materials in which a synthetic resin substrate such as polyethylene terephthalate (PET), polypropylene (PP), or the like is used.

The second fibrous layer (13) may have a density of 0.8 kg/m$^3$ or more. Specifically, the density of the second fibrous layer (13) may be 0.8 to 1.5 kg/m$^3$, 0.9 to 1.5 kg/m$^3$, 1.0 to 1.5 kg/m$^3$, 1.0 to 1.3 kg/m$^3$, or 1.0 to 1.2 kg/m$^3$. When the density of the second fibrous layer (13) is within the above range, a very high bonding strength is obtained between fibers in the second fibrous layer (13), whereby the mechanical strength of the packaging material (10) can be significantly enhanced.

In addition, the second fibrous layer (13) may have a ratio of softwood fibers of 20 to 100% based on the total fibers in the second fibrous layer (13). When the ratio of softwood fibers in the second fibrous layer (13) is within the above range, mechanical strength and density can be enhanced as the ratio of long fibers in the second fibrous layer (13) increases.

Meanwhile, the second fibrous layer (13) may comprise a portion of a component derived from a sealing coating layer (14). Specifically, the second fibrous layer (13) may comprise a composite layer formed by partially impregnating a sealing coating solution for forming a sealing coating layer (14). For example, referring to Fig. 2, the second fibrous layer (13) may comprise a paper layer (13a) and a composite layer (13b) in which the paper substrate and some components derived from a sealing coating layer (14) are combined. As the composite layer (13b) is provided, the second fibrous layer (13) can exhibit significantly higher bonding strength with the sealing coating layer (14).

### Sealing coating layer

The packaging material (10) according to an embodiment of the present disclosure comprises a sealing coating layer (14). The sealing coating layer (14) is formed on one side of the second fibrous layer (13) and functions to increase the water resistance and sealing properties of the packaging material (10).

The sealing coating layer (14) may comprise a thermoplastic resin (e.g., acrylic resin, polypropylene, or the like) that can be strongly bonded to the second fibrous layer (13), thereby increasing the sealing properties of the packaging material (10), while it is water-dispersible and heat-adhesive. Specifically, the sealing coating layer (14) may comprise a material that enhances the sealing properties of the packaging material (10) and has water-soluble or biodegradable properties. For example, the sealing coating layer (14) may comprise at least one selected from the group consisting of a water-based thermoplastic acrylic resin, polyhydroxyalkanoate (PHA), and a polyethylene emulsion. As the sealing coating layer (14) comprises a material having water-soluble or biodegradable properties, the recyclability of the packaging material (10) can be increased, along with excellent sealing properties.

The sealing coating layer (14) may have a sealing strength (heat adhesive strength) of 1 kgf/15 mm or more in order to enhance the usability and processability of the packaging material (10). Specifically, the sealing coating layer (14) may have a sealing strength (heat adhesive strength) of 1 to 5 kgf/15 mm, 1.5 to 5 kgf/15 mm, 2 to 5 kgf/15 mm, 2.5 to 5 kgf/15 mm, or 3 to 5 kgf/15 mm.

The sealing coating layer (14) may have a thickness of 3 to 30 $\mu$m, 10 to 30 $\mu$m, 13 to 28 $\mu$m, 15 to 25 $\mu$m, or 17 to 25 $\mu$m. As the thickness of the sealing coating layer (14) is within the above range, the packaging material (10) is prevented from becoming thicker than necessary, thereby enhancing productivity, while securing antifouling properties and sealing properties of the packaging material (10).

The sealing coating layer (14) may be composed of a single layer or two or more layers (e.g., a laminated structure of a first sealing coating layer and a second sealing coating layer, or a laminated structure of a first sealing coating layer, a second sealing coating layer, and a third sealing coating layer) to enhance sealing strength.

<u>Barrier layer</u>

The packaging material (10) according to an embodiment of the present disclosure may further comprise a barrier layer to enhance barrier properties to oxygen and/or moisture.

Specifically, referring to Fig. 3, the barrier layer (15) may be interposed between the first fibrous layer (12) and the second fibrous layer (13). This barrier layer (15) functions to enhance the barrier properties (gas barrier properties) of the packaging material (10) to oxygen and/or moisture.

The barrier layer (15) may comprise a biodegradable resin or a water-soluble resin that can secure recyclability and biodegradability while enhancing the gas barrier properties of the packaging material (10). Specifically, the barrier layer (15) may comprise at least one selected from the group consisting of polyhydroxyalkanoate (PHA), polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), thermoplastic starch (TPS), cellulose-derived substances (e.g., nanocellulose, carboxymethylcellulose (CMC), cellulose ether, and the like), whey protein, soy protein, and wheat protein.

The barrier layer (15) may have a thickness of 3 to 30 $\mu$m, 5 to 25 $\mu$m, 10 to 25 $\mu$m, 15 to 25 $\mu$m, or 18 to 25 $\mu$m. As the thickness of the barrier layer (15) is within the above range, manufacturing efficiency and productivity can be enhanced while enhancing the gas barrier properties of the packaging material (10).

<u>Adhesive layer</u>

When the packaging material (10) according to the present disclosure is prepared by a lamination method, it may further comprise an adhesive layer that bonds the respective layers.

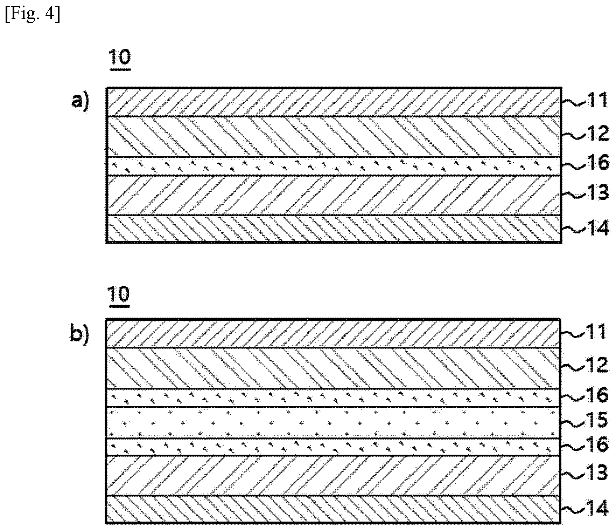

Specifically, referring to Fig. 4(a), the adhesive layer (16) may be interposed between the first fibrous layer (12) and the second fibrous layer (13). In addition, referring to Fig. 4(b), the adhesive layer (16) may be interposed between the first fibrous layer (12) and the barrier layer (15) and between the second fibrous layer (13) and the barrier layer (15), respectively. The adhesive layer (16) functions to strongly bond the first fibrous layer (12) and the second fibrous layer (13), or the first fibrous layer (12), the barrier layer (15), and the second fibrous layer (13) to each other, thereby enhancing the usability and processability of the packaging material (10).

The adhesive layer (16) may comprise an adhesive material capable of exhibiting high adhesive strength without deteriorating the physical properties of the packaging material (10). Specifically, the adhesive layer (16) may comprise at least one selected from the group consisting of polyhydroxyalkanoate (PHA), polyvinyl alcohol (PVA), ethylene-vinyl acetate (EVA), polyolefin resin emulsions, ethylene methyl acrylate (EMA), acrylic resins, and urethane resins.

The adhesive layer (16) may have a thickness of 1 to 10 $\mu$m, 3 to 10 $\mu$m, or 5 to 10 $\mu$m. As the thickness of the adhesive layer (16) is within the above range, the processability and usability of the packaging material (10) may be increased.

Physical properties of the packaging material

The packaging material according to the present disclosure comprises a first fibrous layer and a second fibrous layer, wherein the Cobb sizing degree is 25 $g/m^2 \cdot 30$ minutes or less. Specifically, the packaging material according to an embodiment of the present disclosure may have a Cobb sizing degree of 1 to 30 $g/m^2 \cdot 30$ minutes, 1 to 25 $g/m^2 \cdot 30$ minutes, 1 to 20 $g/m^2 \cdot 30$ minutes, 1 to 14 $g/m^2 \cdot 30$ minutes, or 1 to 10 $g/m^2 \cdot 30$ minutes. As the Cobb sizing degree is within the above range, the packaging material according to the present disclosure can exhibit high mechanical strength and excellent barrier properties to oxygen and/or moisture.

The Cobb sizing degree may be defined as the amount (weight) of water absorbed by a packaging material when a certain amount of water is poured into the packaging material of a certain size for 30 minutes. Specifically, the Cobb sizing degree may be calculated according to the following Equation 1.

Cobb sizing degree = (weight of packaging material after water absorption - weight of packaging material before water absorption, g)/(absorption area, $m^2$) [Equation 1]

The packaging material may have an oxygen permeability of 100 $cc/m^2 \cdot day$ or less and a moisture permeability of 100 $g/m^2 \cdot day$ or less. Specifically, the packaging material may have an oxygen permeability at 23 °C and RH 0% of 0.1 to 100 $cc/m^2 \cdot day$, 0.1 to 50 $cc/m^2 \cdot day$, 0.1 to 10 $cc/m^2 \cdot day$, 0.1 to 5 $cc/m^2 \cdot day$, or 0.1 to 1 $cc/m^2 \cdot day$. In addition, the packaging material according to an embodiment of the present disclosure may have a moisture permeability at 37.8°C and RH 100% of 0.1 to 100 $g/m^2 \cdot day$, 0.1 to 50 $g/m^2 \cdot day$, 0.1 to 10 $g/m^2 \cdot day$, 0.1 to 5 $g/m^2 \cdot day$, or 0.1 to 1 $g/m^2 \cdot day$.

The packaging material according to the present disclosure may have a sealing strength (heat adhesive strength) of 1 kgf/15 mm or more. Specifically, the packaging material according to an embodiment of the present disclosure may have a sealing strength of 1 to 5 kgf/15 mm, 1.5 to 5 kgf/15 mm, 2 to 5 kgf/15 mm, 2.5 to 5 kgf/15 mm, or 3 to 5 kgf/15 mm. As the sealing strength is within the above range, the packaging material according to the present disclosure can have excellent bonding (adhesion) properties between the respective layers (minimizing the phenomenon of delamination between the layers). As a result, the usability, processability, and productivity of the packaging material can be enhanced.

The packaging material according to the present disclosure may have a surface energy (surface tension) of 38 dyne/cm or more. Specifically, the packaging material according to an embodiment of the present disclosure may have a surface energy of 38 to 55 dyne/cm, 40 to 55 dyne/cm, 42 to 55 dyne/cm, 44 to 55 dyne/cm, or 46 to 55 dyne/cm. As the surface energy is within the above range, the packaging material according to the present disclosure may have excellent printability (designability). This surface energy may be measured with a surface tension measuring pen (e.g., Dynepen).

The packaging material according to the present disclosure may have a tensile strength of 8 kgf or more as measured by a universal testing machine (UTM, model name 5966) according to ASTM D882. Specifically, the packaging material according to an embodiment of the present disclosure may have a tensile strength of 8 to 18 kgf, 8 to 15 kgf, 10 to 15 kgf, or 12 to 15 kgf. As the tensile strength is within the above range, the packaging material according to the present disclosure may have excellent usability, processability, and moldability.

The packaging material according to the present disclosure may have a biodegradability of 60% or more, 65% or more, 70% or more, or 75% or more as measured according to KS M 14855-1. The biodegradability indicates the rate of decomposition of the packaging material as compared with the standard material (e.g., cellulose) for a certain period of time. It may be calculated according to the following Equation 2.

$$[\text{Equation 2}]$$

$$\text{Biodegradability (Dt)} = \{((CO_2)T - (CO_2)B)/ThCO_2\} \times 100$$

$(CO_2)T$: the accumulated amount of carbon dioxide generated from the composting container containing a test substance

$(CO_2)B$: average of the accumulated amount of carbon dioxide generated from the inoculum container

$ThCO_2$: the theoretical amount of carbon dioxide that can be generated from the test substance

$$ThCO_2 = M_{TOT} \times C_{TOT} \times 44/12$$

$M_{TOT}$: total dry solids (g) of the test substance added to compost at the beginning of the test

$C_{TOT}$: proportion of organic carbon contained in the total dry solids of the test substance (g/g)

44/12: molecular weight of carbon dioxide and atomic weight of carbon

The packaging material according to the present disclosure described above comprises a surface coating layer, a sealing coating layer, and a barrier layer, which are biodegradable or water-soluble, and a first fibrous layer and a second fibrous layer, which are relatively readily decomposed; thus, it is readily decomposed in soil and the ocean, making it environmentally friendly. In addition, the packaging material according to the present disclosure may be excellent in recyclability. In addition, the packaging material according to the present disclosure may be excellent in gas barrier properties by virtue of the barrier layer.

Accordingly, the packaging material according to the present disclosure can be advantageously used for packaging various products such as food, pharmaceuticals, cosmetics, and industrial products. For example, the packaging material according to an embodiment of the present disclosure can be used as a pouch for retort food, a lid film for a food container, and the like.

The packaging material according to the present disclosure may be prepared to have a multilayer structure by adopting methods such as lamination, extrusion coating, and the like, which will be described in detail as follows.

**Process for preparing a multilayer packaging material**

In the process for preparing a packaging material according to an embodiment of the present disclosure, methods such as lamination, extrusion coating, and the like, which are used when plastic films are prepared, are adopted. Thus, packaging materials with various laminated structures can be efficiently prepared depending on the purposes.

Specifically, the process for preparing a packaging material according to the present disclosure comprises coating a surface coating solution on one side of a first fibrous substrate to prepare a first fibrous film; coating a sealing coating solution on one side of a second fibrous substrate to prepare a second fibrous film; and laminating the first fibrous film and the second fibrous film such that the first fibrous substrate and the second fibrous substrate face each other, which will be described in detail as follows.

In order to form the surface coating layer and the first fibrous layer, a surface coating solution is coated on one side of a first fibrous substrate to prepare a first fibrous film.

The first fibrous substrate is not particularly limited and comprises paper prepared from pulp, which may be prepared or selected depending on the intended use.

In addition, the first fibrous substrate may be subjected to surface treatment with at least one primer selected from the group consisting of polyvinyl alcohol (PVOH) and modified starch.

The surface coating solution may comprise a material that has water-soluble properties while exhibiting water resistance required for a packaging material. Specifically, the surface coating solution may comprise at least one selected from the group consisting of a water-based thermosetting acrylic resin, a water-based latex, a water-based modified latex, a water-based urethane resin, and a polyethylene emulsion. In addition, the surface coating solution may further comprise additives such as mineral oil and wax, commonly known additives (e.g., polymerization initiators, crosslinking agents, emulsifiers, fillers, antioxidants, leveling agents, and antifoaming agents), and solvents.

The method of coating the surface coating solution on one side of the first fibrous substrate is not particularly limited. Specifically, methods such as spray coating, spin coating, bar coating, dip coating, and doctor blade may be used.

The surface coating solution thus coated is dried at 80 to 150°C to prepare a first fibrous film.

In order to form the sealing coating layer and the second fibrous layer, a sealing coating solution is coated on one side of a second fibrous substrate to prepare a second fibrous film.

The second fibrous substrate may be paper made of mechanical pulp, semi-chemical pulp, or chemical pulp. The paper may specifically be at least one selected from the group consisting of white paper (imitation vellum), off-white paper, colored paper, coarse paper, heavy paper, art paper, snow paper, snow white paper, single-sided art paper, royal art paper, leather paper, laid paper, Kraft paper, tracing paper, glassine paper, tant paper, fancy paper, white board paper, or photo paper.

The second fibrous substrate may have a density of $0.8 \text{ kg/m}^3$ or more (specifically, 0.8 to $1.5 \text{ kg/m}^3$, 0.9 to 1.5 $\text{kg/m}^3$, 1.0 to $1.5 \text{ kg/m}^3$, 1.0 to $1.3 \text{ kg/m}^3$, or 1.0 to $1.2 \text{ kg/m}^3$).

The sealing coating solution may comprise a thermoplastic resin (e.g., acrylic resin, polypropylene, or the like) that can be strongly bonded to the second fibrous substrate, thereby enhancing the sealing properties of the packaging material. Specifically, the sealing coating solution may comprise a material that has water-soluble or biodegradable properties. For example, the sealing coating solution may comprise at least one selected from the group consisting of a water-based thermoplastic acrylic resin, polyhydroxyalkanoate (PHA), and a polyethylene emulsion. In addition, the sealing coating solution may further comprise commonly known additives (e.g., polymerization initiators, crosslinking agents, emulsifiers, fillers, antioxidants, leveling agents, and antifoaming agents) and solvents.

The method of coating the sealing coating solution on one side of the second fibrous substrate is not particularly limited. Specifically, methods such as spray coating, spin coating, bar coating, dip coating, and doctor blade may be used.

The sealing coating solution thus coated is dried at 80 to 150°C to prepare a second fibrous film.

Next, the first fibrous film and the second fibrous film are laminated. Specifically, the first fibrous film and the second fibrous film are laminated with the first fibrous substrate and the second fibrous substrate facing each other so that the first fibrous layer and the second fibrous layer can be formed inside the packaging material. Here, an adhesive may be coated between the first fibrous film and the second fibrous film to secure good bonding between them. Specifically, a commonly known adhesive may be coated on the other side of the first fibrous substrate, the other side of the second fibrous substrate, or both, and the first fibrous film and the second fibrous film may then be laminated.

Lamination of the first fibrous film and the second fibrous film may be carried out at 50 to 120°C.

A film-type packaging material having a laminated structure of a surface coating layer, a first fibrous layer, a second fibrous layer, and a sealing coating layer may be prepared through the above procedures.

In the present disclosure, a packaging material is prepared using different types of fibrous films (e.g., paper films) with different purposes as described above. Thus, it can exhibit enhanced physical properties as compared with packaging materials prepared from a single fibrous film.

Specifically, attempts have been conventionally made to prepare packaging materials with printability, water resistance and antifouling properties, and sealing properties, along with high mechanical strength, using a single fibrous film. However, there have been limitations in preparing packaging materials that satisfy all of the above performances due to the limitations in the physical properties of such a single fibrous film. However, in the present disclosure, a packaging material is prepared by combining a first fibrous film with the purpose of increasing printability and antifouling and water resistance properties and a second fibrous film with the purpose of enhancing sealing properties and mechanical strength, whereby it is possible to provide a packaging material that satisfies all of the above performances.

Meanwhile, the process for preparing a packaging material according to an embodiment of the present disclosure may further comprise forming a barrier layer inside the packaging material using a barrier film or barrier coating solution.

Specifically, the process for preparing a packaging material according to an embodiment of the present disclosure may comprise interposing a barrier film between the first fibrous film and the second fibrous film and laminating them.

The barrier film may comprise a biodegradable resin or a water-soluble resin that can secure recyclability and biodegradability while enhancing the gas barrier properties of the packaging material. Specifically, the barrier film may comprise at least one selected from the group consisting of polyhydroxyalkanoate (PHA), polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), thermoplastic starch (TPS), cellulose-derived substances, whey protein, soy protein, and wheat protein.

Lamination of the first fibrous film, the barrier film, and the second fibrous film may be carried out at 50 to 120°C.

In addition, the process for preparing a packaging material according to an embodiment of the present disclosure may further comprise coating the other side of the first fibrous film or the other side of the second fibrous film with a barrier coating solution.

The barrier coating solution may comprise a biodegradable resin or a water-soluble resin that can secure recyclability and biodegradability while enhancing the gas barrier properties of the packaging material. Specifically, the barrier coating solution may comprise at least one selected from the group consisting of polyhydroxyalkanoate (PHA), polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), thermoplastic starch (TPS), cellulose-derived substances, whey protein, soy protein, and wheat protein. In addition, the barrier coating solution may further comprise commonly known additives (e.g., crosslinking agents, emulsifiers, fillers, antioxidants, leveling agents, and antifoaming agents) and solvents.

Coating of the barrier coating solution may be carried out at 80 to 150°C.

In addition, the method of coating the barrier coating solution is not particularly limited. Specifically, methods such as extrusion coating, spin coating, and spray coating may be used.

A film-type packaging material having a laminated structure of a surface coating layer, a first fibrous layer, a barrier layer, a second fibrous layer, and a sealing coating layer may be prepared through the procedure of forming a barrier layer.

The packaging material prepared by the above procedures may be used for packaging various products by itself or may be used for packaging through post-processing. Examples of the post-processing include a process for combining a bubble wrap to increase shock absorbency and a process of molding to a desired shape (e.g., extrusion molding, injection molding, compression molding, pressure molding, blowing or blow molding, thermoforming, or the like).

## Mode for the Invention

Hereinafter, the present disclosure will be described in detail with reference to Examples, but the scope of the present disclosure is not limited to the Examples.

**<Preparation of an environmentally friendly packaging material>**

**Example 1**

Paper (basis weight: 60 g/m$^2$, white paper) was coated with a water-based thermosetting acrylic resin coating solution, which was dried at 100 to 150°C to prepare a first fibrous film in which a surface coating layer and a first fibrous layer (first paper layer) were combined.

Paper (basis weight: 40 g/m$^2$, density: 0.8 to 1.2 kg/m$^3$, glassine paper) was coated with a water-based thermoplastic acrylic resin coating solution, which was dried at 100 to 150°C to prepare a second fibrous film in which a sealing coating layer and a second fibrous layer (second paper layer) were combined.

The first fibrous film and the second fibrous film were placed with the first fibrous layer and the second fibrous layer facing each other and then laminated. In such an event, a urethane-based solvent-free adhesive was used between the first fibrous film and the second fibrous film to bond them through the lamination.

A packaging material laminated in the order of a surface coating layer (thickness: 10 $\mu$m), a first fibrous layer (thickness: 68 $\mu$m), a second fibrous layer (thickness: 40 $\mu$m), and a sealing coating layer (thickness: 18 $\mu$m) was prepared through the above procedures.

**Example 2**

A PVOH film was interposed between the first fibrous film and the second fibrous film prepared as in Example 1, and the films were laminated to prepare packaging material laminated in the order of a surface coating layer (thickness: 10 $\mu$m), a first fibrous layer (thickness: 68 $\mu$m), a barrier layer (thickness: 20 $\mu$m), a second fibrous layer (thickness: 40 $\mu$m), and a sealing coating layer (thickness: 18 $\mu$m). In such an event, a urethane-based solvent-free adhesive was used between the respective films to bond them through the lamination.

**Comparative Example 1**

One side of paper (basis weight: 80 g/m$^2$, white paper) was coated with a water-based thermosetting acrylic resin coating solution, which was dried at 100 to 150°C. The other side was coated with a water-based thermoplastic acrylic resin coating solution, which was dried at 100 to 150°C to prepare a packaging material having water resistance on one side and sealing properties on the other side.

**Test Example**

The physical properties of the packaging materials prepared in Examples and Comparative Examples were evaluated in the following manner. The results are shown in Table 1 below.

1. Cobb sizing degree: measured by adjusting the absorption time to 30 minutes according to the Tappi T 411 test method.

2. Oxygen permeability (oxygen transmission rate): measured at 23 $\pm$ 0.5°C using an OX-TRAN$^®$ 2/22 oxygen permeability meter of Mocon.

3. Moisture permeability (water vapor transmission rate): measured at 38 $\pm$ 0.5°C and 90 $\pm$ 2% relative humidity using a Permatran-w$^®$ 3/34 moisture permeability meter of Mocon.

4. Sealing strength (heat adhesive strength): measured using a 3365 R 7300 universal tensile tester of Instron at a grip spacing of 50 mm, a speed of 100 mm/minute, and a sample width of 15 mm.

5. Tensile strength: A specimen cut to 100 mm in length and 15 mm in width was prepared in accordance with ASTM D882, which was mounted with a chuck spacing of 50 mm and measured using an Instron 3365 R 7300 universal tensile tester.

[Table 1]

| | | Example 1 | Example 2 | Comparative Example 1 |
|---|---|---|---|---|
| Cobb sizing degree (g/m$^2$·30 min) | | 8 | 8 | 15 |
| Oxygen permeability (cc/m$^2$·day) | | Not measurable | 10 | Not measurable |
| Moisture permeability (g/m$^2$·day) | | Not measurable | 80 | Not measurable |
| Sealing strength (kgf/15 mm) | Surface coating layer | 0.1 | 0.1 | 0.1 |
| | Sealing coating layer | 1.5 | 1.5 | 0.7 |

(continued)

| | Example 1 | Example 2 | Comparative Example 1 |
|---|---|---|---|
| Tensile strength (MD, kgf) | 15 | 18 | 10 |
| Not measurable unable to measure with OX-TRAN® 2/22 oxygen permeability meter of Mocon and Permatran-w® 3/34 moisture permeability meter of Mocon. | | | |

Referring to Table 1 above, the packaging materials of Examples 1 and 2 according to the present disclosure had a low Cobb sizing degree and high sealing strength and tensile strength.

[Explanation of Reference Numerals]

    10: packaging material
    11: surface coating layer
    12: first fibrous layer
    13: second fibrous layer
    14: sealing coating layer
    15: barrier layer
    16: adhesive layer

Claims

1.   A multilayer packaging material, which comprises a surface coating layer, a first fibrous layer, a second fibrous layer, and a sealing coating layer.

2.   The multilayer packaging material of claim 1, wherein the surface coating layer has a surface energy of 38 dyne/cm or more, and the sealing coating layer has a sealing strength of 1 kgf/15 mm or more.

3.   The multilayer packaging material of claim 1, wherein the surface coating layer comprises at least one selected from the group consisting of a water-based thermosetting acrylic resin, a water-based latex, a water-based modified latex, a water-based urethane resin, and a polyethylene emulsion.

4.   The multilayer packaging material of claim 1, wherein the first fibrous layer comprises a primer layer formed on the surface, and the primer layer comprises at least one selected from the group consisting of polyvinyl alcohol (PVOH) and modified starch.

5.   The multilayer packaging material of claim 1, wherein the second fibrous layer has a density of 0.8 kg/m$^3$ or more.

6.   The multilayer packaging material of claim 1, wherein the second fibrous layer comprises a portion of a component derived from the sealing coating layer.

7.   The multilayer packaging material of claim 1, wherein the sealing coating layer comprises at least one selected from the group consisting of a water-based thermoplastic acrylic resin, polyhydroxyalkanoate (PHA), and a polyethylene emulsion.

8.   The multilayer packaging material of claim 1, which further comprises a barrier layer interposed between the first fibrous layer and the second fibrous layer.

9.   The multilayer packaging material of claim 8, wherein the barrier layer comprises a biodegradable resin or a water-soluble resin.

10.  The multilayer packaging material of claim 8, wherein the barrier layer comprises at least one selected from the group consisting of polyhydroxyalkanoate (PHA), polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), thermoplastic starch (TPS), cellulose-derived substances, whey protein, soy protein, and wheat protein.

11. A multilayer packaging material, which comprises a first fibrous layer and a second fibrous layer, wherein the Cobb sizing degree is 25 g/m$^2$·30 minutes or less.

12. The multilayer packaging material of claim 11, which has an oxygen permeability of 100 cc/m$^2$·day or less and a moisture permeability of 100 g/m$^2$·day or less.

13. The multilayer packaging material of claim 11, which has a sealing strength of 1 kgf/15 mm or more.

14. The multilayer packaging material of claim 11, which has a surface energy of 38 dyne/cm or more.

15. A process for preparing a multilayer packaging material, which comprises:

coating a surface coating solution on one side of a first fibrous substrate to prepare a first fibrous film;
coating a sealing coating solution on one side of a second fibrous substrate to prepare a second fibrous film; and
laminating the first fibrous film and the second fibrous film such that the first fibrous substrate and the second fibrous substrate face each other.

16. The process for preparing a multilayer packaging material of claim 15, which comprises interposing a barrier film between the first fibrous film and the second fibrous film and laminating them.

17. The process for preparing a multilayer packaging material of claim 15, which further comprises coating the other side of the first fibrous film or the other side of the second fibrous film with a barrier coating solution.

[Fig. 1]

[Fig. 2]

[Fig. 3]

[Fig. 4]

## INTERNATIONAL SEARCH REPORT

| International application No. |
|---|
| **PCT/KR2023/004345** |

| **A. CLASSIFICATION OF SUBJECT MATTER** |
|---|
| **B32B 5/26**(2006.01)i; **B32B 27/12**(2006.01)i; **B32B 27/30**(2006.01)i; **B32B 23/10**(2006.01)i; **B32B 9/02**(2006.01)i |

According to International Patent Classification (IPC) or to both national classification and IPC

| **B. FIELDS SEARCHED** |
|---|

Minimum documentation searched (classification system followed by classification symbols)

B32B 5/26(2006.01); B29C 49/22(2006.01); B32B 15/08(2006.01); B32B 27/00(2006.01); B32B 27/10(2006.01); B32B 27/32(2006.01); D21H 19/18(2006.01); D21H 19/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다층 포장재(multilayered package material), 표면 코팅층(surface coating layer), 제 1 섬유층(first fibrous layer), 제2 섬유층(second fibrous layer), 실링 코팅층(sealing coating layer), 프라이머층(primer layer), 배리어층(barrier layer)

| **C. DOCUMENTS CONSIDERED TO BE RELEVANT** | | |
|---|---|---|
| Category* | Citation of document, with indication, where appropriate, of the relevant passages | Relevant to claim No. |
| X | JP 4317662 B2 (TETRA LAVAL HOLDINGS & FINANCE S.A.) 19 August 2009 (2009-08-19)<br>See paragraphs [0001], [0034], [0043], [0067], [0093], [0102] and [0112]; and figures 4 and 6. | 1-3,5,7-17 |
| Y | | 4,6 |
| Y | JP 2003-334893 A (DAINIPPON PRINTING CO., LTD.) 25 November 2003 (2003-11-25)<br>See paragraphs [0007] and [0029]-[0030]; and figure 1. | 4 |
| Y | JP 2005-219380 A (TOSOH CORP.) 18 August 2005 (2005-08-18)<br>See paragraphs [0005], [0007] and [0027]-[0028]. | 6 |
| A | KR 10-2013-0058306 A (LEE, Poong Woo) 04 June 2013 (2013-06-04)<br>See entire document. | 1-17 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 June 2023** | **28 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/004345** |

**C.     DOCUMENTS CONSIDERED TO BE RELEVANT**

| Category* | Citation of document, with indication, where appropriate, of the relevant passages | Relevant to claim No. |
|---|---|---|
| A | US 2003-0161976 A1 (REA, Kevin D. et al.) 28 August 2003 (2003-08-28)<br>    See entire document. | 1-17 |

Form PCT/ISA/210 (second sheet) (July 2022)

INTERNATIONAL SEARCH REPORT

**Information on patent family members**

International application No.

**PCT/KR2023/004345**

| Patent document cited in search report | | | Publication date (day/month/year) | Patent family member(s) | | | Publication date (day/month/year) |
|---|---|---|---|---|---|---|---|
| JP | 4317662 | B2 | 19 August 2009 | CN | 1333717 | A | 30 January 2002 |
| | | | | EP | 1144186 | A1 | 17 October 2001 |
| | | | | EP | 1144186 | B1 | 27 October 2004 |
| | | | | JP | 2002-530224 | A | 17 September 2002 |
| | | | | WO | 00-30846 | A1 | 02 June 2000 |
| JP | 2003-334893 | A | 25 November 2003 | None | | | |
| JP | 2005-219380 | A | 18 August 2005 | None | | | |
| KR | 10-2013-0058306 | A | 04 June 2013 | KR | 10-1329259 | B1 | 14 November 2013 |
| US | 2003-0161976 | A1 | 28 August 2003 | CN | 1620489 | A | 25 May 2005 |
| | | | | EP | 1468058 | A2 | 20 October 2004 |
| | | | | JP | 2005-515292 | A | 26 May 2005 |
| | | | | JP | 2011-153322 | A | 11 August 2011 |
| | | | | JP | 4841805 | B2 | 21 December 2011 |
| | | | | JP | 5449253 | B2 | 19 March 2014 |
| | | | | KR | 10-0965012 | B1 | 21 June 2010 |
| | | | | KR | 10-2004-0083090 | A | 30 September 2004 |
| | | | | US | 2003-0031865 | A1 | 13 February 2003 |
| | | | | US | 2005-0287324 | A1 | 29 December 2005 |
| | | | | US | 6472056 | B1 | 29 October 2002 |
| | | | | US | 6720050 | B2 | 13 April 2004 |
| | | | | US | 6908665 | B2 | 21 June 2005 |
| | | | | US | 7294658 | B2 | 13 November 2007 |
| | | | | WO | 01-02507 | A1 | 11 January 2001 |
| | | | | WO | 03-062339 | A2 | 31 July 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120103158